# EUROPÄISCHE PATENTSCHRIFT

(11) **EP 1 955 924 B1**
(45) Veröffentlichungstag und Bekanntmachung des Hinweises auf die Patenterteilung: **06.05.2009**
(21) Anmeldenummer: 07120442.4
(22) Anmeldetag: 12.11.2007
(51) Int. Cl.: B62D 5/04, B62D 6/00

(54) **Verfahren zum Betrieb eines Lenksystems in einem Kraftfahrzeug**
Method for operating a steering system in a motor vehicle
Procédé destiné au fonctionnement d'un système de direction dans un véhicule automobile

(30) Priorität: 08.02.2007 DE 102007006237
(43) Veröffentlichungstag der Anmeldung: 13.08.2008
(73) Patentinhaber: ZF Lenksysteme GmbH, 73527 Schwäbisch Gmünd (DE)
(72) Erfinder: Greul, Roland, 73547, Lorch-Waldhausen (DE); Heilig, Arnulf, 73529, Schwäbisch Gmünd (DE)

(56) Entgegenhaltungen:
- EP-A- 1 683 706
- EP-A- 1 849 682
- EP-A- 1 889 775
- WO-A-20/04012976
- DE-A1- 3 822 171

## Beschreibung

Die Erfindung bezieht sich auf ein Verfahren zum Betrieb eines Lenksystems in einem Kraftfahrzeug nach dem Oberbegriff des Anspruches 1.

Bei einem in der EP 1 683 706 A2 beschriebenen Verfahren zum Betrieb eines Lenksystems wird mittels eines elektrischen Stellmotors ein unterstützendes Servomoment erzeugt. In dem Lenksystem wird vom Fahrer ein Handlenkmoment vorgegeben, dem mithilfe des elektrischen Stellmotors das unterstützende Servomoment überlagert wird. Um die Fahrbahnrückmeldung im Lenksystem zu verbessern, also die vom Fahrer am Lenkrad spürbaren Fahrzeugreaktionen, und hierdurch dem Fahrer Informationen über das Fahrverhalten zu vermitteln, wird in einem geschlossenen Regelkreis die Querbeschleunigung an der Vorderachse des Fahrzeugs bestimmt und einem Korrekturmoment zugrunde gelegt, welches als zusätzliches Motormoment dem Motorsollmoment überlagert wird, das dem elektrischen Stellmotor als Eingangsgröße zugeführt wird. Bei der Ermittlung der Höhe des Motorkorrekturmoments wird die gemessene Querbeschleunigung einer Hochpassfilterung unterzogen, so dass nur Frequenzen oberhalb einer Eck- bzw. Grenzfrequenz berücksichtigt und darunterliegende Frequenzen eliminiert werden. Hierdurch soll erreicht werden, dass dem Fahrer eine Rückmeldung vermittelt wird über höherfrequente Änderungen in den Seitenkräften, die zwischen Reifen und Fahrbahn wirken, beispielsweise als Folge von Reibwertsprüngen der Fahrbahn oder aufgrund von Fahrbahnunebenheiten. Die Berücksichtigung von Frequenzen oberhalb der Eckfrequenz des Hochpassfilters bewirkt eine Trennung von den Frequenzen, die üblicherweise für die Ansteuerung des Servo-Elektromotors verwendet werden.

Ferner ist aus der EP 1849682 A1, die zum Stand der Technik gemäß Artikel 54(3) EPÜ gehört, ein Verfahren zum Betrieb eines Lenksystems in einem Kraftfahrzeug bekannt, wobei der Fahrer über das Lenkrad ein Handlenkmoment im Lenksystem vorgibt, mit einem Aktuator, in dem ein Motorstellmoment zur Lenkunterstützung erzeugt wird, wobei dem Aktuator eine Sollmomentvorgabe zugeführt wird, und wobei im Lenksystem ein Korrekturmoment berücksichtigt wird, welches als Funktion mindestens einer Fahrzeugzustands- oder Fahrzeugbetriebsgröße, die einer Filterung und/oder einer Differenziation unterzogen wird, ermittelt wird, wobei das Korrekturmoment als Handkorrekturmoment unmittelbar zu dem vom Fahrer erzeugten Handlenkmoment hinzuaddiert wird.

Vom Stand der Technik ausgehend liegt der Erfindung die Aufgabe zugrunde, das Lenkverhalten in Kraftfahrzeugen zu verbessern. Es soll insbesondere dem Fahrer über eine Rückmeldung im Lenksystem ein verbessertes Gefühl für das Fahrverhalten des Fahrzeugs vermittelt werden.

Diese Aufgabe wird erfindungsgemäß mit den Merkmalen des Anspruches 1 gelöst. Die Unteransprüche geben zweckmäßige Weiterbildungen an.

Bei dem erfindungsgemäßen Verfahren zum Betrieb eines Lenksystems in einem Kraftfahrzeug wird zunächst in an sich bekannter Weise in einem Aktuator ein Motorstellmoment zur Lenkunterstützung erzeugt, indem diesem Aktuator eine Sollmomentvorgabe zugeführt wird. Des Weiteren wird im Lenksystem ein Korrekturmoment berücksichtigt, das als Funktion mindestens einer Fahrzeugzustands- oder Fahrzeugbetriebsgröße ermittelt wird, welche einer Filterung und/oder einer Differenziation unterzogen wird. Dieses Korrekturmoment wird als Handkorrekturmoment unmittelbar zu dem vom Fahrer erzeugten Handlenkmoment hinzuaddiert.

Im Unterschied zum Stand der Technik, bei dem das Korrekturmoment direkt dem elektromotorischen Stellglied zugeführt wird, wird bei der erfindungsgemäßen Ausführung das Handkorrekturmoment nicht direkt dem Stellglied zugeleitet, sondern zunächst zum Handlenkmoment hinzuaddiert, anschließend wird die Summe beider Momente einer weiteren Bearbeitung unterzogen und erst danach dem Aktuator als Eingangsgröße zugeführt. Der Vorteil dieser Vorgehensweise liegt darin, dass sich das Handkorrekturmoment erheblich stärker auswirkt als das Motorkorrekturmoment, da das Motorkorrekturmoment der Lenkübersetzung unterworfen ist und sich dadurch bezogen auf das Handkorrekturmoment nur mit dem Bruchteil entsprechend der Lenkübersetzung auswirkt. Auf diese Weise ist es möglich, über das Handkorrekturmoment einen sehr viel genauer berechenbaren Einfluss im Lenksystem wirksam werden zu lassen und entsprechend dem Fahrer ein besseres Gefühl für das Fahrverhalten des Fahrzeugs zu vermitteln.

Das Handkorrekturmoment hängt ab von einer oder mehreren Fahrzeugzustands- oder Fahrzeugbetriebsgrößen, die gemessen oder auf sonstige Weise ermittelt, gegebenenfalls nach einem vorgegebenen funktionalen Zusammenhang modifiziert und einer Filterung und/oder einer Differenziation unterzogen werden. Die Filterung bzw. Differenziation ist als Frequenzbewertung anzusehen und verstärkt den Einfluss höherfrequenter Anteile, wobei über die Filterung, insbesondere die Hochpassfilterung, Frequenzen unterhalb der Eck- bzw. Grenzfrequenz ausgefiltert werden und lediglich oberhalb der Eckfrequenz liegende Frequenzanteile berücksichtigt werden. Bei der Differenziation werden zwar grundsätzlich auch tieferfrequente Anteile berücksichtigt, allerdings wirken sich über die Differenziation die höherfrequenten Anteile stärker in der Dynamik aus. Gegebenenfalls können auch beide Frequenzbewertungsmethoden miteinander kombiniert werden.

Das Motorkorrekturmoment kann gemäß einer vorteilhaften Ausführung zusätzlich zu dem Handkorrekturmoment über eine Addition zur Sollmomentvorgabe berücksichtigt werden. Das Korrekturmoment - entweder das Handkorrekturmoment oder sowohl das Handkorrekturmoment als auch das Motorkorrekturmoment - wird zweckmäßigerweise in Abhängigkeit der Raddrehzahlen ermittelt, insbesondere als Funktion der Raddrehzahlen aller vier Räder berechnet. Grundsätzlich ist es aber auch möglich, sonstige Fahrzeugzustands- oder Fahrzeugbetriebsgrößen der Fahrzeuglängsdynamik und/oder der Fahrzeugquerdynamik für die Filterung bzw. Differenziation zu berücksichtigen. Möglich ist aber auch, die Eingangsgröße wie zuvor genannt aus den Raddrehzahlen zu bestimmen, und erst im Filterungs- bzw. Differenziationsschritt weitere Fahrzeugzustandsgrößen oder Betriebsgrößen zu berücksichtigen, beispielsweise den Lenkwinkel, die Fahrzeuggeschwindigkeit, die Querbeschleunigung und/oder die Gierrate.

Weitere Vorteile und zweckmäßige Ausführungen sind den weiteren Ansprüchen, der Figurenbeschreibung und den Zeichnungen zu entnehmen. Es zeigen:
- Fig. 1: eine schematische Darstellung eines Lenksystems in einem Fahrzeug, mit einem Lenkgetriebe und einem vorgeschalteten Überlagerungsgetriebe,
- Fig. 2: ein Blockschaltbild zur Ermittlung des Motorstellmomentes für den Stellmotor im Lenksystem, wobei dem vom Fahrer erzeugten Handlenkmoment ein Handkorrekturmoment überlagert wird, das als Funktion von Fahrzeugzustandsgrößen ermittelt wird, welche einer Filterung bzw. Differenziation unterzogen werden,
- Fig. 3: ein Blockschaltbild mit der Darstellung der Ermittlung des Handkorrekturmomentes.

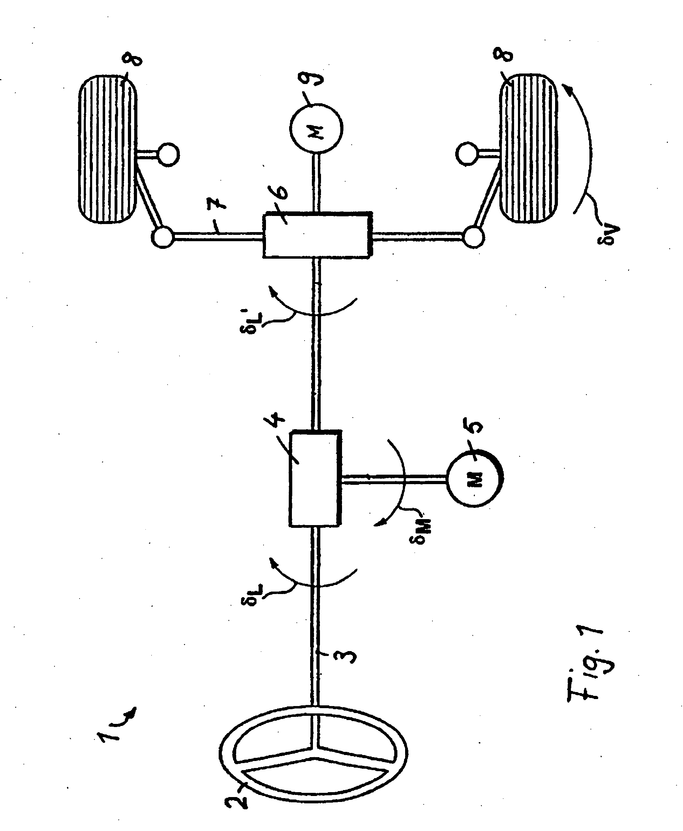

Fig. 1 zeigt eine schematische Darstellung eines Lenksystems 1 in einem Kraftfahrzeug, das ein Lenkrad 2, eine mit dem Lenkrad verbundene Lenkwelle 3, ein Lenkgetriebe 6 mit einem Stellmotor 9 und einem Lenkgestänge 7 umfasst, welches mit den lenkbaren Vorderrädern 8 verbunden ist. Der Fahrer gibt über das Lenkrad 2 einen Lenkwinkel δ_{L} vor, der über die Lenkwelle 3 und das Lenkgetriebe 6 in einen Zahnstangenhub im Lenkgestänge 7 übertragen wird, woraufhin sich in den lenkbaren Vorderrädern 8 ein Radlenkwinkel δᵥ einstellt. Zur Lenkunterstützung kann über den Stellmotor 9 situationsabhängig ein Motorstellmoment eingespeist werden, wobei der Stellmotor 9 zweckmäßig als elektrischer Stellmotor ausgeführt ist, ggf. aber auch ein hydraulischer Aktuator in Betracht kommt.

Wie in Fig. 1 dargestellt, ist dem Lenksystem 1 ein Überlagerungsgetriebe 4 zugeordnet, das einen Stellmotor 5 aufweist. Das Überlagerungsgetriebe 4 ist in die zweigeteilte Lenkwelle 3 zwischengeschaltet. Bei Betätigung des Stellmotors 5 wird im Überlagerungsgetriebe 4 ein Zusatzdrehwinkel δ_{M} generiert, der dem vom Fahrer erzeugten Lenkwinkel δ_{L} zum resultierenden Lenkwinkel δ_{L}' überlagert wird, welcher dem Lenkgetriebe 6 zugeführt wird. Sofern der Stellmotor 5 des Überlagerungsgetriebes 4 nicht betätigt wird, wird auch kein Zusatzdrehwinkel δ_{M} erzeugt; in diesem Fall wird der vom Fahrer erzeugte Lenkwinkel δ_{L} unmittelbar dem Lenkgetriebe 6 als Eingangsgröße zugeführt.

Gegebenenfalls kann auf das Überlagerungsgetriebe 4 einschließlich Stellmotor 5 auch verzichtet werden.

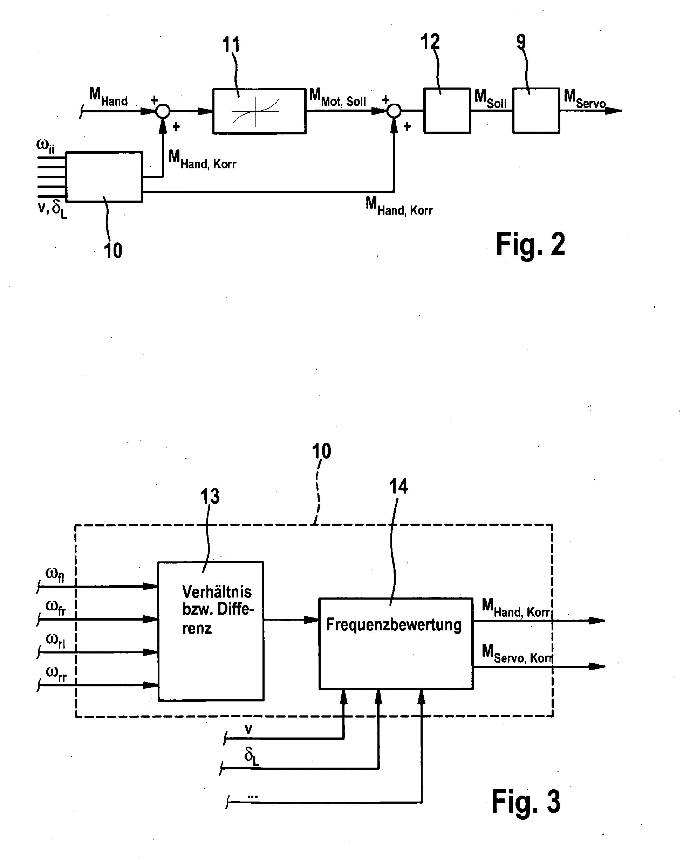

Fig. 2 zeigt ein Blockschaltbild zur Ermittlung des Motorstellmoments M_{Servo}. Dem vom Fahrer erzeugten und über das Lenkrad aufzubringenden Handlenkmoment M_{Hand} wird ein Handkorrekturmoment M_{Hand,korr} additiv überlagert, das in einem Korrekturblock 10 als Funktion diverser Fahrzeugzustandsgrößen bzw. Fahrzeugbetriebsgrößen ermittelt wird, insbesondere in Abhängigkeit der Raddrehzahlen ωᵢᵢ sowie ggf. in Abhängigkeit weiterer Zustandsgrößen wie die Fahrzeuggeschwindigkeit v und der Lenkwinkel δ_{L}. Hintergrund der Erzeugung des Korrekturmomentes ist es, dem Fahrer eine verbesserte Rückmeldung des Fahrverhaltens des Fahrzeuges zu liefern. In dem Korrekturblock 10 werden die Fahrzeugzustands- und/oder Fahrzeugbetriebsgrößen zunächst gemäß einer Berechnungsvorschrift manipuliert und anschließend einer Filterung und/oder einer Differenziation unterzogen, um insbesondere höherfrequente Anteile von im Fahrzeug herrschenden Zustandsgrößen oberhalb einer bestimmten Frequenz stärker zu gewichten, wobei die Grenzfrequenz beispielsweise von dem typischen, für den elektrischen Stellmotor geltenden Frequenzbereich bestimmt wird.

Die Summe aus Handlenkmoment M_{Hand} und Handkorrekturmoment M_{Hand},ₖₒᵣᵣ wird einem Bock 11 zugeführt, in dem eine Kennlinie des Motorsollmomentes M_{Mot},ₛₒₗₗ als Funktion des Handmomentes M_{Hand} abgelegt ist. Am Ausgang des Blockes 11 liegt das Motorsollmoment M_{Mot,soll} an.

In dem Block 10 wird zusätzlich zu dem Handkorrekturmoment M_{Hand,korr} auch ein Motorkorrekturmoment M_{Mot,korr} erzeugt, das dem am Ausgang des Blockes 11 anliegenden Motorsollmoment M_{Mot,soll} aufaddiert wird. Die Summe beider Momente wird anschließend einem Motorregler 12 zugeführt, in welchem eine Sollmomentvorgabe Mₛₒₗₗ generiert wird, die als Eingang dem Stellmotor 9 zuzuführen ist. Im Stellmotor 9 wird daraufhin das Motorstellmoment M_{Servo} erzeugt.

In Fig. 3 ist der Block 10 zur Ermittlung der Korrekturmomente im Detail dargestellt. Der Block 10 besteht aus zwei hintereinandergeschalteten, einzelnen Blöcken 13 und 14, wobei dem ersten Block 13 diverse Fahrzeugzustands- und/oder Betriebsgrößen zugeführt werden, die einer Berechnung unterzogen werden. Im Ausführungsbeispiel fließen in den Block 13 die Raddrehzahlen ω_{fl}, ω_{fr}, ωᵣₗ und ωᵣᵣ sämtlicher vier Räder ein, aus deren Verhältnis bzw. Differenz zueinander insbesondere auf die Fahrzeugquerdynamik geschlossen werden kann. Der Ausgangswert des Blockes 13 wird dem Block 14 zugeführt, in welchem eine Frequenzbewertung durchgeführt wird, wobei ggf. weitere Fahrzeugzustands- und Betriebsgrößen wie z.B. die Fahrzeuggeschwindigkeit v und der Lenkwinkel δ_{L} einfließen können. Bei der Frequenzbewertung handelt es sich um eine Hochpassfilterung, bei der nur Frequenzen oberhalb einer bestimmten Eck- bzw. Grenzfrequenz berücksichtigt werden, wohingegen Frequenzen unterhalb der Eck- bzw. Grenzfrequenz ausgefiltert werden. Alternativ oder auch zusätzlich kommt eine Differenziation in Betracht. Am Ausgang des Blockes 14 mit der Frequenzbewertung liegen die Korrekturmomente M_{Hand},ₖₒᵣᵣ und M_{Mot,korr} an, die wie in Fig. 2 dargestellt einer Weiterverwendung zugeführt werden.

## Patentansprüche

1. Verfahren zum Betrieb eines Lenksystems in einem Kraftfahrzeug, wobei der Fahrer über das Lenkrad ein Handlenkmoment (M_{Hand}) im Lenksystem vorgibt, mit einem Aktuator (9), in dem ein Motorstellmoment (M_{Servo}) zur Lenkunterstützung erzeugt wird, wobei dem Aktuator (9) eine Sollmomentvorgabe (Mₛₒₗₗ) zugeführt wird, und wobei im Lenksystem ein Korrekturmoment (M_{Hand,korr}) berücksichtigt wird, welches als Funktion mindestens einer Fahrzeugzustands- oder Fahrzeugbetriebsgröße, die einer Filterung und/oder einer Differenziation unterzogen wird, ermittelt wird, wobei das Korrekturmoment als Handkorrekturmoment (M_{Hand,korr}) unmittelbar zu dem vom Fahrer erzeugten Handlenkmoment (M_{Hand}) hinzuaddiert wird, wobei
das Korrekturmoment zusätzlich zum Handkorrekturmoment (M_{Hand,korr}) auch ein Motorkorrekturmoment (M_{Mot,korr}) umfasst, das zur Sollmomentvorgabe (Mₛₒₗₗ) hinzuaddiert wird, wobei
das Korrekturmoment (M_{Hand,korr}, M_{Mot,korr}) in Abhängigkeit der Raddrehzahlen (ω_{fl}, ω_{fr}, ωᵣₗ, ωᵣᵣ) ermittelt wird.

2. Verfahren nach Anspruch 1,
**dadurch gekennzeichnet,**
**dass** die Raddrehzahlen (ω_{fl}, ω_{fr}, ωᵣₗ, ωᵣᵣ) aller vier Räder ermittelt und der Filterung und/oder Differenziation zugrunde gelegt werden.

3. Verfahren nach Anspruch 1 oder 2,
**dadurch gekennzeichnet,**
**dass** in der Filterung und/oder Differenziation weitere Fahrzeugzustandsgrößen berücksichtigt werden, insbesondere der Lenkwinkel (δ_{L}), die Fahrzeuggeschwindigkeit, die Querbeschleunigung und/oder die Gierrate.

4. Verfahren nach einem der Ansprüche 1 bis 3,
**dadurch gekennzeichnet,**
**dass** die Filterung als Hochpassfilterung durchgeführt wird.

## Claims

1. Method for operating a steering system in a motor vehicle, wherein the driver predefines a manual steering torque (Mₘₐₙ) in the steering system by means of the steering wheel, comprising an actuator (9) in which a motor actuating torque (Mₛₑᵣᵥₒ) for assisting the steering is generated, wherein a setpoint predefined torque (Mₛₑₜₚ) is fed to the actuator (9), and wherein a correction torque (M_{man,corr}) is taken into account in the steering system, said correction torque (M_{man,corr}) being determined as a function of at least one vehicle state variable or vehicle operating variable which is subjected to filtering and/or differentiation, wherein the correction torque is added, as a manual correction torque (M_{man,corr}), directly to the manual steering torque (Mₘₐₙ) which is generated by the driver, wherein the correction torque comprises, in addition to the manual correction torque (M_{man,corr}), a motor correction torque (Mmot,corr) which is added to the setpoint predefined torque (Mₛₑₜₚ), wherein the correction torque (M_{man,corr}), (M_{mot,corr}) is acquired as a function of the wheel speeds (ω_{fl}, ω_{fr}, ωᵣₗ, ωᵣᵣ).

2. Method according to Claim 1, **characterized in that** the wheel speeds (ω_{fl}, ω_{fr}, ωᵣₗ, ωᵣᵣ) of all four wheels are acquired and used as the basis for filtering and/or differentiation.

3. Method according to Claim 1 or 2, **characterized in that** further vehicle state variables, in particular the steering angle (δ_{L}), the vehicle speed, the lateral acceleration and/or the yaw rate, are taken into account in the filtering and/or differentiation.

4. Method according to one of Claims 1 to 3, **characterized in that** the filtering is carried out as a high pass filtering process.

## Revendications

1. Procédé pour faire fonctionner un système de direction dans un véhicule automobile, le conducteur prédéfinissant par le biais du volant de direction un couple de direction manuel (M_{Hand}) dans le système de direction, avec un actionneur (9) dans lequel est généré un couple de réglage du moteur (Mₛₑᵣᵥₒ) pour l'assistance à la direction, une valeur prédéfinie de couple de consigne (Mₛₒₗₗ) étant acheminée à l'actionneur (9), et un couple de correction (M_{Hand, korr}) étant pris en compte dans le système de direction, lequel est déterminé sous forme de fonction d'au moins une valeur d'état du véhicule ou de fonctionnement du véhicule, qui est soumise à un filtrage et/ou une différenciation, le couple de correction étant ajouté sous forme de couple de correction manuelle (M_{Hand, korr}) directement au couple de direction manuelle (M_{Hand}) produit par le conducteur,
le couple de correction comprenant, en plus du couple de correction manuelle (M_{Hand, korr}), également un couple de correction moteur (M_{Mot, korr}), qui est ajouté à la valeur prédéfinie de couple de consigne (Mₛₒₗₗ), le couple de correction (M_{Hand, korr}, M_{Mot, korr}) étant déterminé en fonction des vitesses de rotation des roues (ω_{fl}, ω_{fr},ωᵣₗ, ωᵣᵣ).

2. Procédé selon la revendication 1,
**caractérisé en ce que**
les vitesses de rotation des roues (ω_{fl}, ω_{fr}, ωᵣₗ, ωᵣᵣ) des quatre roues sont déterminées et sont utilisées comme base pour le filtrage et/ou la différenciation.

3. Procédé selon la revendication 1 ou 2,
**caractérisé en ce que**
dans le filtrage et/ou la différenciation sont prises en compte d'autres valeurs d'état du véhicule, notamment l'angle de direction (δ_{L}), la vitesse du véhicule, l'accélération transversale et/ou la vitesse de lacet.

4. Procédé selon l'une quelconque des revendications 1 à 3,
**caractérisé en ce que**
le filtrage est réalisé sous forme de filtrage passe-haut.
